# EUROPEAN PATENT APPLICATION

(11) **EP 3 498 384 A1**
(43) Date of publication of application: **19.06.2019**
(21) Application number: 17207768.7
(22) Date of filing: 15.12.2017
(51) Int. Cl.: B05D 3/10, B05D 5/08, B05D 7/22, B05D 1/18, B05D 1/36, B32B 1/08, C08J 7/00, C08L 83/00, B82Y 30/00, C01B 33/00, C08G 77/00, B05D 7/02, B05D 3/00, B05D 3/14

(54) **NANOFILAMENT COATINGS ON SURFACES OF NON-PLANAR, IN PARTICULAR TUBULAR SUBSTRATES, AND METHODS FOR PREPARING THE SAME**

(71) Applicant: Max-Planck-Gesellschaft zur Förderung der Wissenschaften e.V., 80539 München (DE)
(72) Inventor: Hans-Jurgen Butt Dr., 57223 Kreustal (DE); Doris Vollmer Dr., 55118 Mainz (DE); Florian Geyer, 67549 Worms (DE); Chig-Yu Yang Dr., Taipei City, 114 (TW); Noemi Encinas Dr., CP 28004 Madrid (ES); Maria D'Acunzi Dr., 55131 Mainz (DE)
(74) Representative: v. Bezold & Partner Patentanwälte - PartG mbB

(57) **Abstract**

The present invention provides a method for coating a surface of a 3-dimensional substrate having a non-planar surface geometry, in particular a substrate comprising at least one lumen or cavity, with a highly liquid-repellent and/or microorganism-repellent nanofilament coating comprising at least the following steps:
a) contacting the substrate surface or a part thereof, in particular including the inner surface of any lumen or cavity thereof, for a predetermined period of time with an activating agent to generate oxygen-comprising functional groups, or to provide an absorbed water film or adsorbed water drops on said surface.
b) contacting the substrate surface obtained after step a) for a predetermined period of time with a siliconizing agent to form a coating of liquid-repellent and/or microorganism-repellent silicone nanofilaments on said substrate surface or a part thereof, wherein the siliconizing agent comprises at least one substituted silane compound capable to react with oxygen-comprising groups or preabsorbed water film or water drops on said substrate surface and also to undergo a polysiloxane reaction with water to form covalently bonded silicone nanofilaments on said substrate surface or part thereof.

In some preferred embodiments, the activation agent in step a) is selected from various oxidizing agents, in particular reagents including hydrogen peroxide and a catalyst capable to provide hydroxyl radicals in a Fenton's reaction, or from water film or water drops providing agents, in particular a mixture of a C₁-C₇ alkanol and water, or a humid gas, such, as air, nitrogen or oxygen, having a relative humidity of more than 60%.

A further aspect of the invention relates to a 3-dimensional substrate having a non-planar surface geometry, in particular a substrate comprising at least one lumen or cavity having a high aspect ratio, with a highly liquid-repellent and/or microorganism-repellent coating comprising silicone nanofilaments, in particular on the inner surface of said lumen or cavity or at least a part thereof, which is obtainable by the method as described above.

## Description

### Background of the invention

A common approach to provide a substrate with desired surface properties involves the application or deposition of a coating on said substrate. Depending on the respective kind of substrate and desired surface properties a large variety of methods are known for this purpose. However, in particular coating of surfaces with a complex non-planar geometry, such as substrates comprising at least one lumen or cavity having a high aspect ratio, e.g. tubings, remains still difficult and many methods (e.g. chemical vapour deposition, lithography, spin or spray coating) and coating materials which have been successfully employed with planar substrates are not suitable for this kind of substrates.

This applies in particular to coatings which impart highly liquid-repellent (i.e. superhydrophobicity and/or superoleophobicity) or microorganism-repellent properties or a combination of both. It is still a huge challenge to homogeneously coat the inside of surfaces having one lumen or many isolated or connected cavities with a three-dimensional irregular layer having characteristic spacings in the submicrometer to micrometer range. Commonly used methods to deposit coatings like spray coating of various nanoparticles or dip-coating in nanoparticle solutions, deposition of candle soot, photolithography, etching through laser-ablation and etching through gas plasma cannot be used to coat the inside of high aspect ratio tubes, as these methods require a direct access to the substrate to be coated. Etching of metals like copper or aluminum may be suitable method to achieve superhydrophobic tubes, however these methods are limited to the respective substrates. Furthermore, the obtained structures are different from the nanofilament-like structures disclosed in this invention.

Methods for providing liquid-repellent silicone-based coatings on essentially planar surfaces and textiles are already known in the art. For example, WO 2016/001377 A discloses a coating composition comprising dispersed silicone nanoparticles for forming a superhydrophobic, superoleophobic or superamphiphobic layer on a substrate.

Also, a method for preparing a fluorinated silica colloid-based superhydrophobic coating comprising nanoparticles but no nanofilaments on a substrate and the use thereof for reducing microbial adhesion is known from US 9675994.

Meier et al. disclose in Advanced Science News (Small 2017, 13, 16010) the use of silicone nanofilaments modified with biocidal silver nanoparticles for water disinfection.

None of these methods or coating materials have been applied to surfaces with a complex non-planar geometry, such as substrates comprising at least one lumen or cavity having a high aspect ratio as outlined above.

In view of the drawbacks of the methods of the prior art, the main object of the present invention was to provide nanofilament coatings with highly liquid-repellent and/or microorganism-repellent properties on substrate surfaces, including the inner and/or outer surfaces of 3-dimensional substrates having a non-planar surface geometry, in particular substrates comprising at least one lumen or cavity having a high aspect ratio, such as tubular substrates, as well as methods for preparing the same.

This objective has been achieved by providing the coating method according to claim 1, the coated substrate according to claim 8 as well as the uses thereof according to claims 18 and 19. Additional aspects and more specific or preferred embodiments of the invention are the subject of further claims.

### Description of the invention

The method according to the invention for coating a surface of a 3-dimensional substrate having a non-planar surface geometry, in particular a substrate comprising at least one lumen or cavity, with a highly liquid-repellent and/or microorganism-repellent nanofilament coating comprises at least the following steps:
a) contacting the substrate surface or a part thereof, in particular including the inner surface of any lumen or cavity thereof, for a predetermined period of time with an activating agent to generate oxygen-comprising functional groups, such as hydroxy, carboxy, carbonyl and peroxy groups, preferably hydroxy, or to provide an absorbed water film or absorbed water drops on said surface.
b) contacting the substrate surface obtained after step a) for a predetermined period of time, preferably in the range from 10 min to 20 h, with a siliconizing agent to form a coating of liquid-repellent and/or microorganism-repellent silicone nanofilaments on said substrate surface or a part thereof, wherein the siliconizing agent comprises at least one substituted silane compound capable to react with oxygen-comprising groups or preabsorbed water film or preabsorbed water drops on said substrate surface and also to undergo a polysiloxane reaction with water to form essentially covalently bonded silicone nanofilaments on said substrate surface or part thereof.

The activation agent in step a) may be any agent which is capable to generate oxygen-comprising functional groups, such as hydroxy, carboxy, carbonyl and peroxy groups, preferably hydroxy, or to provide an absorbed water film or absorbed water drops on said surface.

More specifically, it is selected from i) oxidizing agents, in particular oxygen plasma, reagents capable to provide hydroxyl radicals in a chemical reaction, in particular reagents comprising hydrogen peroxide, including a mixture of H₂SO₄/H₂O/H₂O₂ with proportions in the range from 1:100:1 to 10:1:10, a mixture of NH₃/H₂O/H₂O₂ with proportions in the range from 1:100:1 to 10:1:10, and reagents capable to provide hydroxyl radicals in a Fenton's reaction, typically including hydrogen peroxide and a catalyst, and
ii) water film or water drops providing agents, such as a mixture of a C₁-C₇ alkanol, in particular ethanol, and water with a ratio between 80:20 and 20:80 by volume, or a humid gas, in particular air, nitrogen or oxygen having a relative humidity above 60%, preferably above 70%, more preferably above 80%.

In one specific embodiment, activation in form of an adsorbed water film or absorbed water drops are achieved by contacting the substrate with mixture of a C₁-C₇ alkanol, in particular ethanol, and water with a ratio between 80:20 and 20:80 or with humid air or another gas in particular nitrogen, oxygen (relative humidity above 60%, preferably above 70%, more preferably above 80%).

The term "Fenton's reaction" generally refers to reactions where hydrogen peroxide is catalytically decomposed to generate hydroxy radicals. The catalyst is selected from a range iron containing species including iron salts (Fe²⁺ and Fe³⁺), in particular iron(II) sulfate (FeSO₄), iron(III) sulfate, iron(II) chloride, iron(III) chloride; iron oxides, in particular iron(III) oxide (Fe₂O₃), iron(II,III) oxide (Fe₃O₄) or elemental iron. Alternatively, the catalyst is selected from a group of iron-free Fenton catalysts including aluminium, chromium, cerium, copper, cobalt, manganese and ruthenium and other transition metals, in the form of the zero-valent metal, metal salt or metal oxide, in particular copper(0), copper(II) sulfate, copper(II) oxide, manganese(II) oxide, manganese(IV) oxide, cerium(IV) oxide and others. Alternatively, the catalyst is selected from the group of polyoxometalates, in particular polyoxomolybdates (e.g. V₂Mo₁₀O₄₀⁵⁻), silicotungstic acid (SiW₁₂O₄₀⁴⁻). The reaction may be enhanced by exposure to ultraviolet or solar light (photochemical Fenton or photo-Fenton), electrochemical reduction of oxygen to form hydrogen peroxide (electrochemical Fenton or electro-Fenton), ultrasonication (sono-Fenton) or a combination of these.

Consequently, the term "reagents capable to provide hydroxyl radicals in a Fenton's reaction", as used herein is meant to encompass any combination of reagents including hydrogen peroxide and a catalyst capable to provide hydroxy radicals, in particular under the typical conditions of a Fenton's reaction as described above.

For long tubular substrates, e.g. having a length of more than ca. 3 cm, it may be impossible to homogeneously activate the entire inner substrate surface using an oxygen plasma, especially if the tubing has a low inner diameter < 3 mm. Therefore, the present inventors developed other activation/oxidation methods which are in particular advantageous for activating the inner surface of long tubes of arbitrary length. In this approach, Fenton's reagent (in the general sense of a reagent capable to provide hydroxyl radicals in a Fenton's reaction as defined above) or another liquid-based activating agent, in particular as disclosed above is used.

In one preferred embodiment, the activation step a) comprises performing a Fenton reaction and the activation agent is a reagent including hydrogen peroxide and a catalyst capable to provide hydroxy radicals in a Fenton's reaction.

In a more specific embodiment, the activating/oxidizing agent is the classical Fenton's reagent which is industrially used to oxidize contaminants or treat waste water as it can destroy organic compounds. Fenton's reagent, which was already discovered in 1894, is an aqueous solution of hydrogen peroxide and ferrous iron. The ferrous iron acts as catalyst to produce hydroxyl radicals. First, the Fe²⁺ is oxidized to Fe³⁺ by the hydrogen peroxide forming a hydroxyl radical and hydroxy oxide ion:

Fe²⁺ + H₂O₂ → Fe³⁺ + HO· + OH⁻

These hydroxyl radicals have the second highest oxidation potential (redox potential 2.80 V) of all common oxidation agents, being only surpassed by fluorine (redox potential 3.03 V). Similar to the oxygen plasma the hydroxy radicals oxidize the polymeric surface of the tubes introducing functional groups containing oxygen, like hydroxy, peroxy, etc. Thus, a Fenton's reagent can be used to activate the inner surface of the tubes by injecting or pumping the solution inside of the tube. Due to the ability to pump the solution through the tube, the length of tube is not limited.

In another preferred embodiment, activation by forming an adsorbed water film or absorbed water drops are achieved by simply flushing or pumping a mixture of a C₁-C₇ alkanol, in particular ethanol, and water with a ratio between 80:20 and 20:80 by volume through the tubular substrate of arbitrary length. Adsorption of a water layer may also be achieved by flushing humid air or another gas in particular nitrogen, oxygen (relative humidity above 60%, preferably above 70%, more preferably above 80%) through the tubular substrate.

The siliconizing agent in step b) typically comprises at least one substituted silane having the general formula R¹SiX₃, wherein R¹ is a C₁-C₂₀alkyl group or vinyl and X is a hydrolysable group such as a halogen atom or C₁-C₆ alkoxy group, in particular trichloromethylsilane (TCMS), such as trimethoxymethylsilane, triethoxymethylsilane, trichloroethylsilane, trichloropropylsilane, trichlorovinylsilane, or octyltrichlorosilane.

In a specific embodiment of the method of the invention which provides fluorinated nanofilaments, the siliconizing agent comprises at least one fluorinated or perfluorinated silane having the general formula R²SiX₃, wherein R² is a fluorinated or perfluorinated C₄-C₂₀ alkyl group, alternatively a perfluorinated polyether (PFPE) group with 20 to 80 repeating units, and X is a hydrolysable group such as a halogen atom or C₁-C₆ alkoxy group, in particular a 1H,1H,2H,2H-perfluorodecyltrichlorosilane (PFDTS), 1H,1H,2H,2H-perfluorooctyltrichlorosilane, 1H,1H,2H,2H-perfluorododecyltrichlorosilane or 1H,1H,2H,2H-perfluorodecyltrimethoxysilane, 1H,1H,2H,2H-perfluorooctyltrimethoxysilane, 1H,1H,2H,2H-perfluorododecyltrimethoxysilane or 1H,1H,2H,2H-perfluorodecyltrimethoxysilane, 1H,1H,2H,2H-perfluorooctyltrimethoxysilane, perfluorododecyltrimethoxysilane, as well as a tetraalkoxysilane (C₁-C₆), in particular such as tetraethoxysilane (TEOS) or tetramethoxysilane (TMOS), or a substituted silane as defined above.

Advantageously, the nanofilament coating obtained after step b) of the above method may be further modified to introduce desirable functional groups or components on the surface of said nanofilaments and, thus, to impart further favourable surface characteristics to said nanofilament coating or to enhance or adjust the original surface properties of said nanofilaments or coating.

Thus, the method of the invention may further comprise at least one additional modification step c) to provide, e.g., oxygen-comprising functional groups, fluorinated alkyl groups, grafted or adsorbed polymers brushes or polymers, in particular flexible polyethylene glycol and polydimethylsiloxane brushes, charged or chargeable polyelectrolytes, in particular polyacrylamides, polyacrylates, quaternary ammonium containing polymers and polyzwitterionic species, e.g. poly(carboxybetaine methacrylate), poly(sulfobetaine methacrylate), and dextranes, or other charged or chargeable moieties/groups on the surface of said nanofilaments.

In a more specific embodiment, said modification step c) comprises at least one of the following steps:
i) contacting the nanofilaments obtained after step b) with an oxidizing agent, in particular oxygen plasma or a reagent including hydrogen peroxide and a catalyst capable to provide hydroxyl radicals in a Fenton's reaction;
ii) optionally contacting the nanofilaments obtained after step i) with a fluorinated or perfluorinated silane having the general formula R²SiX₃, wherein R² is a fluorinated or perfluorinated C₄-C₂₀alkyl group, alternatively a perfluorinated polyether (PFPE) group with 20 to 80 repeating units, and X is a hydrolysable group such as a halogen atom or C₁-C₆ alkoxy group, e.g. 1H,1H,2H,2H-perfluorodecyltrichlorosilane (PFDTS),
iii) applying a layer of grafted or adsorbed polymer brushes or polymers, in particular flexible polyethylene glycol and polydimethylsiloxane brushes, charged or chargeable polyelectrolytes, in particular polyacrylamides, polyacrylates, quaternary ammonium containing polymers and polyzwitterionic species, e.g. poly(carboxybetaine methacrylate), poly(sulfobetaine methacrylate), and dextranes, onto the surface of nanofilaments obtained after step b) or ci).

Typically, step b) of the claimed method is effected by flushing or pumping a liquid comprising the siliconizing agent through the at least one lumen or cavity of the 3-dimensional substrate.

Preferably, steps a) and c) involve flushing or pumping a liquid comprising the respective agents through the at least one lumen or cavity of the 3-dimensional substrate.

In one specific embodiment, the siliconizing agent is comprised in a suitable organic solvent, typically a non-polar organic solvent such as toluene or n-hexane, including trace amounts of water between 50-500 ppm, typically 50-250 ppm.

A second aspect of the present invention relates to the nanofilament-coated substrates and substrate surfaces which are obtainable by the coating method as disclosed above or an analogous coating method applied to planar or essentially planar substrate surfaces.

More specifically, a further subject of the present invention is a 3-dimensional substrate having a non-planar surface geometry, in particular a substrate comprising at least one lumen or cavity, preferably having a high aspect ratio, with a highly liquid-repellent and/or microorganism-repellent coating comprising silicone nanofilaments, in particular on the inner surface of said lumen or cavity.

The term "aspect ratio" as used herein with respect to a lumen or cavity refers to the ratio of its sizes in different dimensions, and a "high aspect ratio" here generally indicates a considerably larger size in one dimension than that of the other dimensions.

In particular for tubular substrates, the aspect ratio is indicated herein as a ratio length divided by the inner diameter of a tubular element or tubing. The substrate may consist of or comprise one or more of such tubular elements or tubings.

Typically, the term "high aspect ratio" refers to a ratio length : inner diameter in the range from 100000 : 1 to 2: 1, preferably from 50000:1 to 5:1, more preferably from 10000:1 to 10:1, most preferably in the range from 2000:1 to 20:1.

Also typically, the tubular element or tubing has a length of more than 1 cm and an inner diameter of less than 5 mm, preferably a length of more than 10 cm and an inner diameter of less than 3 mm, more preferably a length of more than 20 cm and/or an inner diameter of less than 2 mm or 1 mm.

The term "highly liquid-repellent" as used herein may refer to either polar liquids, in particular water and aqueous media (e.g. phosphate buffered saline, urine, blood, surfactant solutions), or non-polar liquids, in particular organic media (e.g. diiodomethane, oils, saturated and unsaturated hydrocarbons, aromatic hydrocarbons, alcohols), or both and may be also described by terms like "superhydrophobic", "superoleophobic", "superamphiphobic" or "super liquid-repellent".

The properties or terms "superamphiphobicity" and "super liquid-repellency" as used herein generally mean an extremely low affinity or extremely high repellency for water (i.e. "superhydrophobicity") as well as for liquids of low surface tension such as oils, alkanes etc. (i.e."superolephobicity"). A superamphiphobic or super liquid-repellent surface typically exhibits an apparent receding contact angle of at least 120° with respect to 10 µl sized drops of water and also an apparent receding contact angle of at least 120° with respect to 10 µl sized drops of liquids having a surface tension of not more than 0.06 N/m, in particular oils, saturated and unsaturated hydrocarbons, aromatic hydrocarbons, and also aqueous solutions comprising a surface tension reducing agent like blood, urine or surfactants. Furthermore, a drop of 10 µl volume needs to roll- off when tilting the surface by less than 20°.

The apparent receding contact angle is the macroscopically observed contact angle (such as observed with the naked eye or a low resolution microscope). It relates to a length scale much larger than the nano- or microstructures forming the superamphiphobic layer, thus to a length scale typically larger than 1 µm, in particular larger than 100 µm.

A superamphiphobic surface typically also exhibits a sliding or roll off angle below 20° or even below 10° for water, blood, surfactant solutions, aqueous solutions and most organic liquids, in particular oils, alkanes, aromatic compounds.

Characteristic for superhydrophobic surfaces is that they possess a high surface roughness in the nano and/or micro scale and a hydrophobic surface modification. Water drops resting on a superhydrophobic surface sit on top of the surface asperities entrapping air underneath the drop, the so-called Cassie-Baxter state. In this state, a deposited water droplet rolls off very easily. The Cassie state competes with the Wenzel state where the liquid fully wets the substrate.

To repel non-aqueous liquids, surfactant solutions or complex liquids like blood, a surface fluorination is necessary to further lower the surface energy. In addition, the surface roughness or asperities need to have an overhanging morphology. These overhangs prevent the liquids from easily penetrating the rough structure (resulting in a transition from the Cassie state to the Wenzel state), effectively acting as energy barriers. Surfaces with such features are known as superamphiphobic surfaces.

The property or term "microorganism-repellent" as well as "antibiofouling" as used herein, generally refers to a surface having reduced bacterial coverage, typically less than 10% coverage compared to the untreated surface or less than 5% total coverage after incubation with a highly concentrated bacteria solution (10⁸ bacteria/mL, *E. coli* or other bacteria, such as *Pseudomonas fluorescens, Micrococcus luteus, Acinetobacter baumannii, Pseudomonas aeruginosa, Enterobacteriaceae, Enterococcus faecium, Staphylococcus aureus, Helicobacter pylori, Campylobacter spp., Salmonellae, Neisseria gonorrhoeae, Streptococcus pneumoniae, Haemophilus influenzae, Shigella spp*) for a predetermined time (here 72 h), washing and fixating of the bacteria on the surface. The reduced adhesion of the bacteria helps to prevent the risk of infections on medical devices like stents or shunts, infusion or catheter tubes.

Preferably, the nanofilament coating is present on at least a part of the inner surface of said lumen or cavity, in particular the inner surface of such a tubular element or tubing.

In some specific embodiments, the surface of the silicone nanofilaments is modified to display oxygen-comprising functional groups, grafted or adsorbed polymer brushes or polymers, fluorinated alkyl groups, charged or chargeable moieties, or a layer of a material comprising oxygen-comprising functional groups, fluorinated alkyl groups, grafted or adsorbed polymer brushes or polymers or charged or chargeable moieties is provided on the surface of said silicone nanofilaments, and/or the polysiloxane scaffold of said silicone nanofilaments comprises at least one fluorinated or perfluorinated silane monomer unit.

For example, the silicone nanofilaments may be coated with a layer of polyethylene glycol, polypropylene glycol or other polyalkyleneglcols, and polydimethylsiloxane brushes, charged or chargeable polyelectrolytes, in particular polyacrylamides, polyacrylates, quaternary ammonium containing polymers and polyzwitterionic species, e.g. poly(carboxybetaine methacrylate), poly(sulfobetaine methacrylate), and dextranes.

The nanofilament coating may be also infiltrated with a viscous liquid, in particular a liquid having a dynamic viscosity > 0.004 Pas, e.g. a silicone oil, such as polydimethylsiloxane, polyethyleneglycol, perfluorocarbons, e.g. polytetrafluoroethylene or perfluorodecalin.

Thus, one aspect of the present invention relates to a planar or non-planar substrate having a microorganism-repellent coating comprising silicone nanofilaments, wherein the surface of the silicone nanofilaments displays oxygen-comprising functional groups, in particular hydroxyl groups, grafted or adsorbed polymers or polymer brushes, in particular flexible polyethylene glycol and polydimethylsiloxane brushes, charged or chargeable polyelectrolytes, in particular polyacrylamides, polyacrylates, quaternary ammonium containing polymers and polyzwitterionic species, e.g. poly(carboxybetaine methacrylate), poly(sulfobetaine methacrylate), and dextranes, fluorinated alkyl groups, charged or chargeable moieties, or wherein a layer of a material comprising oxygen-comprising functional groups, fluorinated alkyl groups, grafted or adsorbed polymers or polymer brushes, or charged or chargeable moieties is provided on the surface of said silicone nanofilaments, and/or wherein the nanofilament coating is infiltrated by layer of a viscous liquid, in particular a liquid having a dynamic viscosity > 0.004 Pas, e.g. silicone oil, such as polydimethylsiloxane, polyethyleneglycol, perfluorocarbons, e.g. polytetrafluoroethylene or perfluorodecalin.

More specifically, the silicone nanofilaments on said substrate are coated with a layer of grafted or adsorbed polymers or polymer brushes, in particular flexible polyethylene glycol and polydimethylsiloxane brushes, charged or chargeable polyelectrolytes, in particular polyacrylamides, polyacrylates, quaternary ammonium containing polymers and polyzwitterionic species, e.g. poly(carboxybetaine methacrylate), poly(sulfobetaine methacrylate), and dextranes.

Typically, the silicone nanofilaments have a mean diameter in the range from 5 nm to 300 nm, preferably in the range from 20 nm to 150 nm, more preferably in the range from 30 nm to 80 nm and a length in the range from 200 nm to 20 µm, preferably in the range from 400 nm to 10 µm, more preferably in the range from 600 nm to 5 µm, and/or a mean interfilament distance in the range from 20 nm to 1000 nm, preferably from 100 nm to 500 nm.

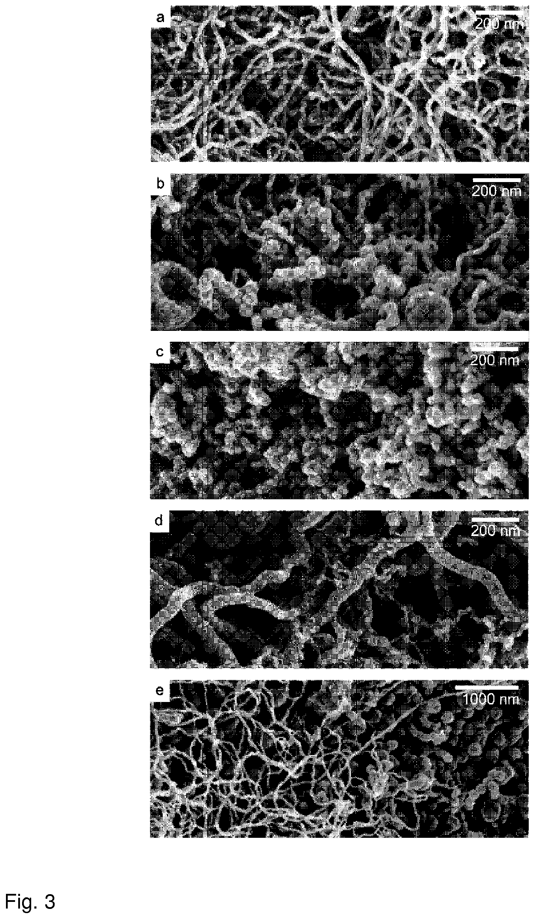

In addition to the nanofilaments there may be some silicone nanoparticles present which are formed during the reaction ranging from a diameter of 40 nm to 2000 nm, preferably from 80 nm to 1000 nm, more preferably from 100 to 500 nm. Typically, these nanoparticles compose only a minor part of the coating (below 50%, preferably below 30%, more preferably below 15%). The nanofilaments may have a smooth surface or even may resemble particle chains (Fig. 3).

The material of the substrate is not especially limited and may be selected from a wide variety of materials and composites or blends thereof. More specifically, the substrate may comprise or consist of a material selected from the group of organic polymers, in particular high density polyethylene (HDPE), low density polyethlene (LDPE), polypropylene (PP), polyurethane (PU), polyvinylchloride (PVC), polysiloxanes, polydimethylsiloxane (PDMS), polyamide, polyvinylidene fluoride, ethylene-vinyl acetate (EVA), polystyrene (PS), polytetrafluoroethylene (PTFE), poly(2-hydroxyethyl methacrylate) (pHEMA), and polyisoprene, inorganic/organic hybrid materials, in particular PU/BaSO4, polymer/titania, polymer/silica combinations, and inorganic ceramics, in particular Al₂O₃, ZrO₂, metals, in particular copper, iron, steel and brass. The substrate can be impermeable for liquids or can have nano- or micrometre sized pores.

A favourable characteristic of the nanofilament-coated substrate according to the present invention is that these nanofilaments are highly microorganism-repellent even in the absence of further anti-microbial agents such as silver etc. (as used, e.g., in the composite material disclosed by Meier et al., above). Therefore, the nanofilament-coated substrate according to the invention does not release and is preferably free from any additional biocide or anti-fouling agent.

A further very favourable characteristic of the nanofilament-coated substrates according to the present invention is that the silicone nanofilament coating remains highly microorganism-repellent even in the wetted Wenzel state or partially wetted Cassie/Wenzel state. In the Wenzel state the contact angle can be below 90°, i.e. the bacterial solution wets the surface of the filaments.

Conventionally, self-cleaning superhydrophobic surfaces have been regarded as one of the most promising strategies for prevention the adhesion of bacteria cells and/or cellular adhesion-promoting substances. Pockets of entrapped air underneath the bacterial solution greatly reduce the contact area between the solution and the surface. However, during long-term exposure of a superhydrophobic surface to a bacterial solution, the air cushion depletes. The superhydrophobic Cassie state passes the transition to the fully wetted Wenzel state. The Wenzel state is characterized by wetting of the surface roughness with the solution. In the Wenzel state the increased contact area typically favours adhesion of bacteria (see e.g. X.-Q. Dou et al., ACS Nano 2015, 9, 10664).

However, as mentioned above this is not the case for the nanofilament-coated substrates according to the present invention and even superhydrophilic nanofilaments- coated substrates are able to effectively prevent bacterial adhesion.

Extensive investigations of the inventors (see experimental results presented in Example 3) lead to the conclusion that this effect is mainly due to the specific geometry and structure of the nanofilament coating according to the present invention.

Firstly, the characteristic spacing between the irregularly arranged nanofilaments falls just below the size of typical bacteria (approximately 1 to 5 µm). This has two advantages: Firstly, the spacing is sufficiently small that the bacteria don't fit into the spacing; Secondly, the spacing is sufficiently large to minimize the number of possible adhesion points for the extracellular organelles, such as flagella, pili and fimbriae. Moreover, the narrow diameter and the strong curvature of the disorderly arranged flexible nanofilaments hinder adhesion of the stiff bacteria. The irregular arrangement of the nanofilaments hinders the bacteria from invading the voids. Thus, the geometric and topographic characteristics of the filaments more than outweighs the wetting properties of the surface, i.e. whether the solution is in the Cassie or fully wetted Wenzel state.

In particular in view of the highly liquid-repellent and microorganism-repellent properties of the nanofilament-coated substrate of the invention, these substrates may be favourable used in various medical applications and devices, in particular stents, shunts, infusion or catheter tubings to prevent infections of the patients, as well as in fluidic or microfluidic applications, gas exchange applications, and water transportation or purification applications to prevent biofouling.

Consequently, in preferred embodiments of the invention the nanofilament-coated substrate represents a medical device or a component thereof, in particular a stent or shunt, an infusion or catheter tubing for implementation into a patient, or a part of a microfluidic device, gas exchange device, water transportation or purification device.

### Brief description of the Figures

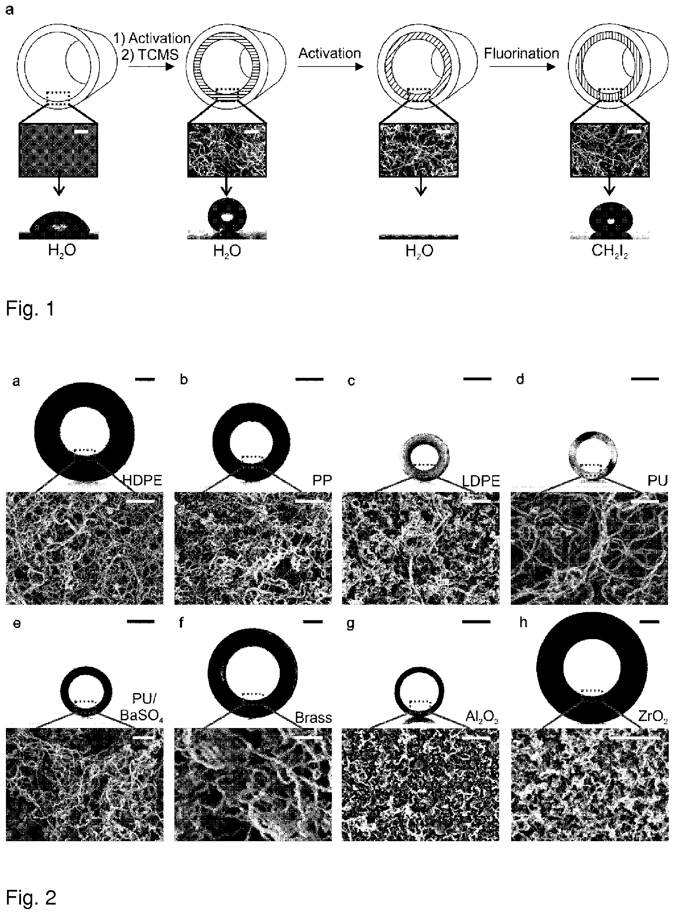

**Fig. 1** illustrates the general coating procedure for the generation of nanofilaments on a tubular substrate. After activation, the nanofilament coating can be applied by immersing in or flushing the tubes with a trichloromethylsilane solution for a certain reaction time, typically 3 hours. Formation of a few micron thick layer of silicone nanofilaments having diameters between 10-100 nm can be observed. Subsequent activation and fluorination yields a super liquid-repellent coating. Scale bars: 500 nm.
**Fig. 2** shows cross-sectional optical images and SEM images of the inner surface of various nanofilament-coated tubes: **a**) High density polyethylene (HDPE) tube; b) Polypropylene (PP) tube; **c**) Low density polyethylene (LDPE) tube; **d**) Polyurethane (PU) tube; **e**) Polyurethane/barium sulfate (PU/BaSO4) tube; **f**) Brass tube; **g**) Alumina (Al₂O₃) ceramic tube. **h**) Zirconia ceramic (ZrO₂) tube. All SEM images show the formation of nanofilaments having diameters between 10 to 100 nm on the inner surface of the tubes. Scale bars: 200 nm for SEM images; 1 mm for optical images.
**Fig. 3** shows SEM images of the various morphologies the described coating can possess. **a**) Thin and smooth nanofilaments on polyurethane tubes; **b**) Nanofilaments transitioning into particles; **c**) Rough nanofilaments which resemble particle chains (here: low density polyethylene coated with filaments); **d**) Thick nanofilaments combined with very thin nanofilaments. **e**) Nanofilament coating containing nanoparticles.

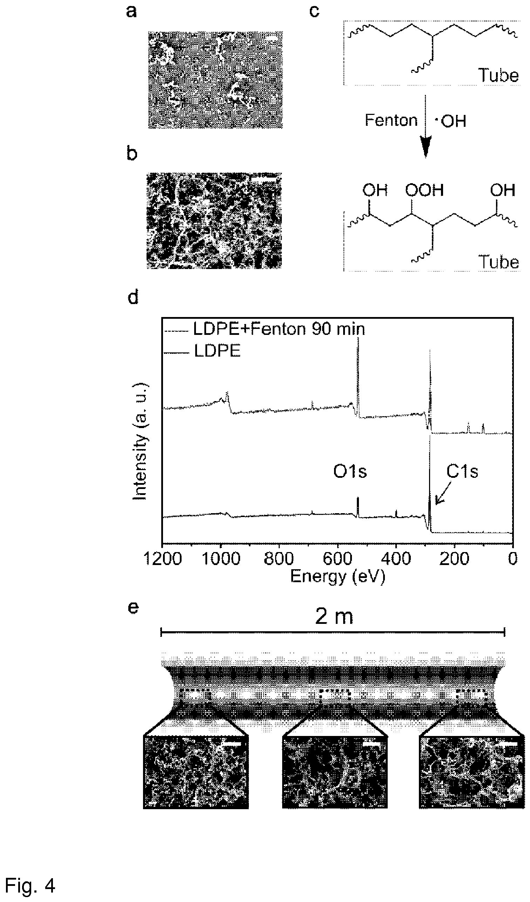

**Fig. 4** shows the necessity of activation and different methods, in particular the Fenton reaction. **a**) Scanning electron microscopic (SEM) image of a low-density polyethylene (LDPE) tube coated without prior activation. **b**) SEM image of a tube activated in an oxygen plasma before the coating was applied. The surface is covered with nanofilaments. **c**) Scheme of the activation of polymer surfaces using the Fenton reagent. **d**) X-Ray photoelectron spectroscopy (XPS) spectra of a bare and Fenton-activated LDPE tube. **e**) SEM images of a coated LDPE tube with a total length of 2 m and an inner diameter of 1 mm taken at both endings and the middle of the tube. Formation of nanofilaments could be observed at all positions. Scale bars: a,b) 500 nm; e) 1 µm.

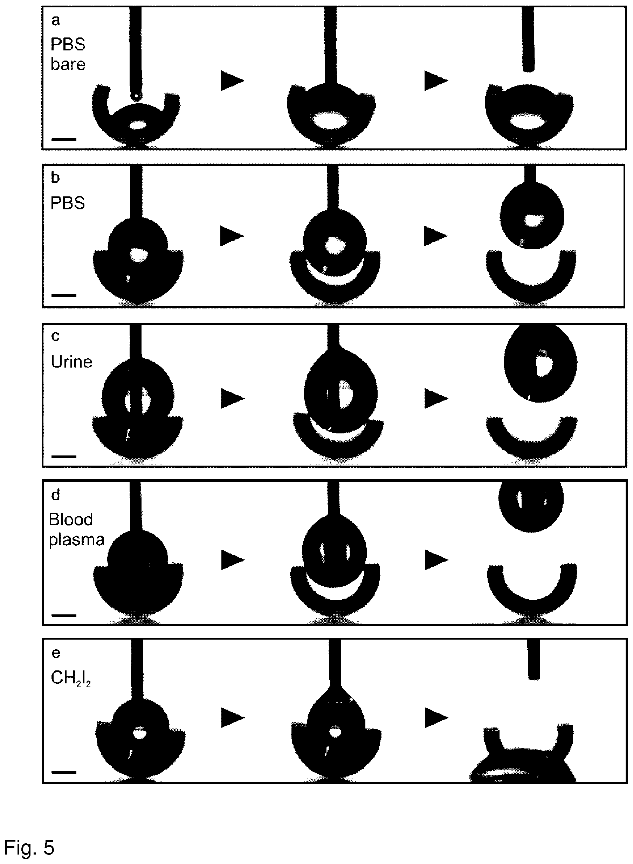

**Fig. 5** shows the wetting properties of a coated and fluorinated polyurethane/barium sulfate (PU/BaSO₄) catheter tube in comparison to a bare PU/BaSO₄ tube: **a**) A 2 µL phosphate buffered saline (PBS) drop sticking on a bare tube **b,c**) A 2 µL PBS and a 3 µL urine droplet on a coated tube; both showed very low adhesion and can be easily removed by retracting the syringe. d) A 2 µL blood plasma drop showed very low adhesion to a coated tube and can be easily removed by retracting the syringe. **e**) A 2 µL diiodomethane drop on a coated tube; during retraction of the syringe the droplet detached from the syringe due to the high density of diiodomethane and rolled out of the tube. Scale bars: 0.5 mm.

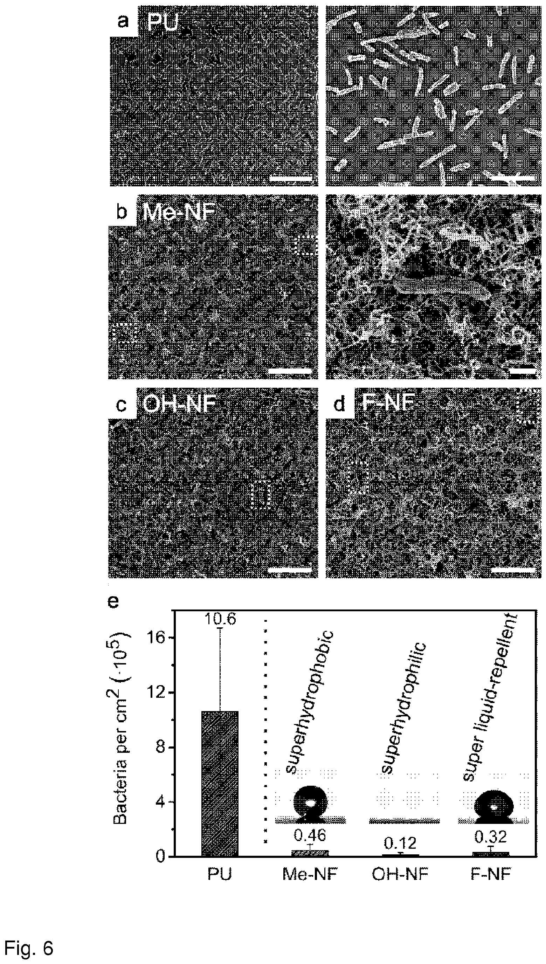

**Fig. 6** shows the antibiofouling properties of various polyurethane (PU) tubes after an incubation time of 168 h in an *E. coli* solution: a) Bare PU tube showing high *E. coli* coverage. Scale bars: 20 µm (left); 4 µm (right). b) Nanofilament-coated PU tube showing highly reduced bacterial coverage (left). High magnification of a single *E. coli* bacterium attached on nanofilaments (right). Scale bars: 4 µm (left); 500 nm (right). c) Superhydrophilic nanofilament-coated PU tube. Scale bar: 4 µm. d) Fluorinated nanofilament-coated PU tube. Scale bar: 4 µm. e) Number of bacteria adhering to the surface for the different surfaces after 168 hours of incubation, documenting the superior antbiofouling properties of the coating. Error: Standard deviation of the data SD.

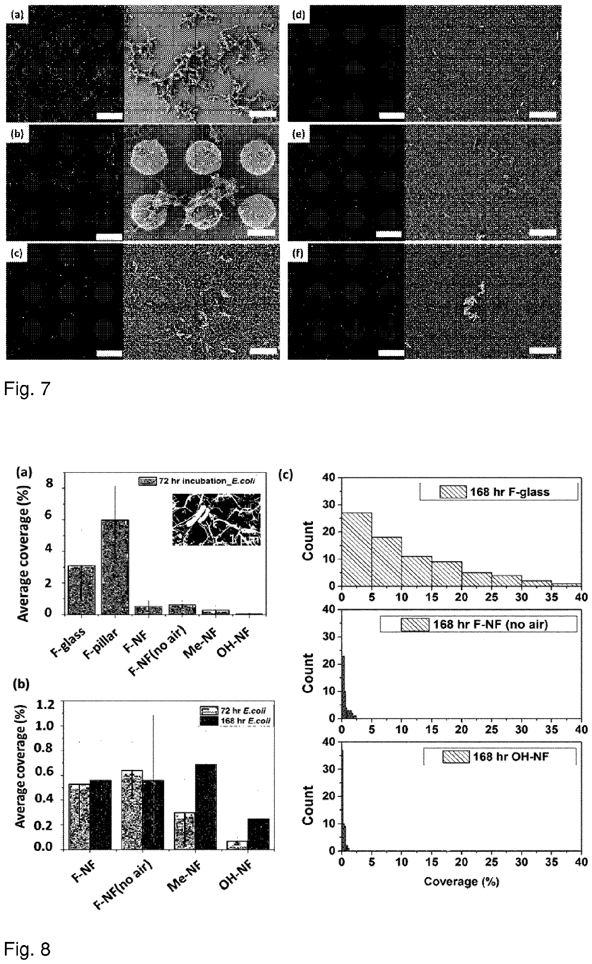

**Fig 7** shows laser scanning confocal microscopy (LSCM) and SEM micrographs of various surfaces after 72 h incubation with *E.coli* bacteria at 37°C. **a**) fluorinated flat glass; **b**) fluorinated micropillar array with 5 µm height and 7 µm of spacing and 13 µm of diameter; **c**) surface coated with as-prepared nanofilaments **d**) surface coated with fluorinated nanofilaments; **e**) surface coated with fluorinated nanofilaments where the air cushion was removed prior to incubation; **f**) plasma-activated nanofilament coating. The LSCM image shows the coverage with bacteria (white spots) close to the pillars' top surface. The *E. coli* were exposed to L-Arabinose for expression of the green fluorescent protein gene, which can be excited at 488 nm. Scale bar of LSCM: 50 µm; scale bar of SEM: 10 µm.
**Fig. 8** shows: **a**) Bacterial coverage area based on SEM images of different surfaces after 72 h incubation. F-glass: fluorinated glass surfaces; F-pillar: fluorinated superhydrophobic micropillar arrays; F-NF: fluorinated nanofilaments in presence of an air cushion; F-NF(no-air): fully wetted fluorinated nanofilaments. The air cushion was removed prior to incubation; Me-NF: as-prepared nanofilaments; OH-NF plasma-activated nanofilaments; **b**) Comparison of adhesion of bacteria on surfaces coated with nanofilaments in presence and absence of an air cushion, different surface functionalities and incubation duration; **c**) Histogram of the special distribution of coverage on three surfaces: fluorinated glass, fully wetted fluorinated nanofilament-coated surface, and superhydrophilic nanofilament-coated surface.

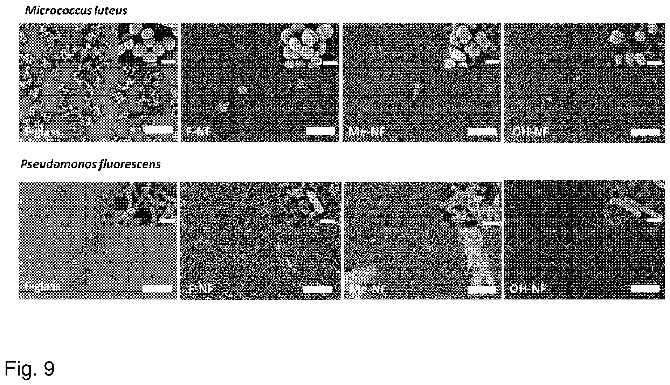

**Fig. 9** shows SEM images after incubating with *Micrococcus luteus* and *Pseudomonas fluorescens* for 72 h: **left**) fluorinated glass (F-glass); left middle) fluorinated nanofilament coating (F-NF); right middle) as-prepared nanofilaments (Me-NF); right) plasma-activated nanofilaments (OH-NF). Scale bar: 10 µm; scale bar of inset SEM images: 1 µm.

The present invention is further illustrated by the following specific but non-limiting examples.

### EXAMPLE 1

### Preparation and characterization of nanofilament-coated tubes

To coat the inside of tubes and hoses with a superhydrophobic coating consisting of nanofilaments the surface needs to be hydrophilic, having polar functional groups; preferentially hydroxy groups. Thus hydrophobic, unfunctionalized polymer surfaces need to be activated. Short polymer tubes can be activated via oxygen plasma, leading to the formation of various functional groups on the polymer surface like hydroxy, carboxy, carbonyl and peroxy groups. After activation, the general procedure (Fig. 1) to coat tubes with a layer of silicone nanofilaments is to immerse the hydrophilic tubes in a solution (e.g. in toluene or n-hexane) of trichloromethylsilane (TCMS) in the presence of trace amounts of water for a certain reaction time. Thereafter, the surface is covered with a few micrometer thick layer of silicone nanofilaments. During the reaction, the TCMS hydrolyzes, inducing a polysiloxane (i.e. silicone) polymerization on the surface of the tube. The coating is superhydrophobic as the methyl groups of the crosslinked silicone polymer orient to the outside to lower the surface energy. To render the coating super liquid-repellent towards surfactant solutions or blood, urine or non-polar liquids the nanofilament-coated tubes are activated and modified with semifluorinated silane.

Notably, fluorinated nanofilaments can also be achieved in a one-step reaction as verified for coating low density polyethylene (LDPE) with filaments (Fig. 3c). Here, a mixture of tetraethoxysilane (TEOS) and 1*H*,1*H*,2*H*,2*H*-perfluorodecyltrichlorosilane is used in toluene containing trace amounts of water (100 ppm). The TEOS and 1H,1H,2H,2H-perfluorodecyltrichlorosilane (PFDTS) hydrolyze due to the trace water in solution, inducing a polymerization on the surface of the tube, co-assembling into nanofilamentous structures.

To show that tubes of vastly different materials can be coated, the inventors investigated organic polymers, inorganic/organic hybrids, metals and ceramics. The inventors applied the coating on commonly used and medically relevant polymer tubes, ranging from high density polyethylene (HDPE), polypropylene (PP), low density polyethylene (LDPE), polyurethane (PU), organic/inorganic hybrid polyurethane/BaSO₄ (Fig 2a-e). The polyurethane tubes as well as polyurethane/BaSO₄ are used in hospital as catheter tubes, with BaSO₄ as X-ray contrast medium. In addition, the coating was applied to brass, alumina (Al₂O₃), zirconia (ZrO₂) (Fig 2f-h). Scanning electron microscopic images demonstrate the formation of nanofilaments on all tubes. On the HDPE, LDPE, PP a coating consisting of mainly thinner nanofilaments (10-30 nm diameter) and some individual thicker nanofilaments (40-70 nm diameter) were obtained. On the polyurethane tubes the diameter of the nanofilaments varied between 20 and 70 nm in diameter. In addition, silicone nanoparticles between 150 and 500 nm diameter were found inside the coating (Fig. 3b). The silicone nanoparticles enhanced the overhanging morphology and roughness. Ceramic tubes showed rather short and thin nanofilaments between 15 and 40 nm. Also on brass the coating consisted of thicker nanofilaments around 50 nm.

Fig. 4 illustrates the necessity of activation, i.e. the presence of hydroxyl groups. Without activation a few randomly distributed nanofilaments formed on low density polyethylene (Fig. 4a). After plasma-activation the tube is coated with a homogenous layer of nanofilaments (Fig. 4b). As plasma activation is only applicable for short tubes, a more versatile method to activate the inner surface of tubes of arbitrary length is required. Alternatively, the inventors found that a Fenton's reagent can be used as the activation agent, in particular for activating the inner surface of long tubes of arbitrary length and inner diameter. X-Ray photoelectron spectroscopy (XPS) spectra of a bare and Fenton-activated low-density polyethylene (LDPE) tube revealed an increase of oxygen functional groups (Fig. 4d). In this approach, the activation solution was injected or pumped inside of the tube. Due to the ability to pump the Fenton solution through the tube, the length of tube is not limited. Remarkably, the inventors found that combined with the ability to pump the coating solution (siliconizing agent) through the tube to prevent depletion of the silane within the tube, the whole coating procedure is not restricted to a certain tube length and diameter. As an example, a 2 m long LDPE tube with a 1 mm inner diameter was coated under flow. SEM images of the inside of the tube were taken at both endings of the tube and from the middle (Fig. 4e). The formation of nanofilaments were observed at all three different positions demonstrating that the coating procedure can be successfully used to coat very long tubes with a low inner diameter (1 mm).

The morphology of the nanofilaments depends on the material and activation of the material. The authors found that already after 20-30 min of exposure to a Fenton solution under flow a coating featuring mostly thick nanofilaments (> 100 nm) could be obtained on a LDPE tube after exposure to the siliconizing agent. After 60 min exposure to the Fenton solution, the coating became more homogenous, forming a highly homogenous filament layer with nanofilaments mostly below 100 nm thickness. After an exposure of 90 min the average nanofilament diameter further reduced. With prolonged exposure (120 min and 180 min) the nanofilaments became thicker again in addition to the formation of nanoparticles. Furthermore, the reaction conditions influence the morphology.

Alternatively, the inventors found that adsorption of a water film or adsorption of water drops on the inner surface of a tube can be used as activation agent for the siliconizing reaction. Therefore, a water/ethanol mixture is injected or pumped through tubes of arbitrary length and inner diameter. Best results were obtained using a water/ethanol mixture with a ratio of 50:50 by volume inside of polyurethane tubes (Fig. 2d-e, Fig. 3a). Adsorption of a water layer may also be achieved by flushing humid air or another gas in particular nitrogen, oxygen (relative humidity above 60%) through the tubular substrate.

### General methods and materials

### Nanofilament-coating of the PU and PU/BaSO₄ tubes:

The PU and PU/BaSO₄ tubes were cleaned by flushing a ethanol/deionized water mixture (1:1). The flushing also leads to an adsorption of a thin water layer which is required for nanofilament growth. Trichloromethylsilane (TCMS) was mixed with n-hexane having a water content of 85 ppm (200 µL TCMS per 100 mL n-hexane). The water content was evaluated using a Karl Fischer coulometer (Mettler Toledo C20 Compact KF coulometer). The solution was stirred for 60 s. After flushing of the tubes, they were immediately immersed in the solution and the reaction chamber was sealed. Alternatively, the solution was injected or pumped through the tube. After 20 h the TCMS-coated tubes were rinsed with n-hexane and dried under a nitrogen stream.

### Nanofilament-coating of the HDPE, PP, LDPE, ceramic (Al₂O₃ and ZrO₂) tubes using plasma activation:

The HDPE, PP, LDPE, Al2O3 and ZrO2 tubes were plasma-cleaned and activated in an oxygen plasma chamber using different exposure times from 36 s to 2 min and different powers ranging from 30 W to 120 W. (Diener Electronic Femto, 6 cm³/min oxygen flow rate). Trichloromethylsilane (TCMS) was mixed with toluene having a water content of 135-140 ppm (400 µL TCMS per 100 mL toluene). The water content was evaluated using a Karl Fischer coulometer (Mettler Toledo C20 Compact KF coulometer). The solution was stirred for 60 s. Afterwards, the tubes were immersed in the solution and the reaction chamber was sealed. Alternatively, the solution was injected or pumped through the tube. After 3 h (20 h for ceramic tubes) the TCMS-coated tubes were rinsed with n-hexane and dried under a nitrogen stream.

### Nanofilament-coating of tubes using Fenton reaction activation:

Iron sulfate heptahydrate (0.25 g) was dissolved in 40 mL of deionized water in a reaction vessel having an in and outlet. The pH of the solution was adjusted to pH = 2.8 using a pH meter by adding sulfuric acid. The mixture was cooled for at least 30 min in an ice bath. The polymeric tube to be activated was connected to the outlet of the reaction vessel using a Tygon connection tube. The end of this polymeric tube was connected to a peristaltic pump (Ismatec MS 4/8) and finally to the inlet of the reaction vessel using Tygon connection tubes. Hydrogen peroxide (35 wt%, 1.8 mL) was slowly added to the acidic aqueous iron sulfate solution under vigorous stirring and the mixture was stirred for 5 min. Afterwards, the pump was started using a flow rate of 8 mL/min. The Fenton solution was pumped through the tube for the desired activation time. Typically, the activation time ranged between 20 min and 3 h. Every 15 min the tube was emptied by reversing the pumping direction to eliminate gas bubbles which may form on the inner surface due to the oxygen evolution during the Fenton reaction. After the desired activation time was reached, the tube was rinsed by flushing water through the tube. Subsequently, the tube was dried by flushing dry nitrogen and further drying in vacuum. After drying, TCMS was mixed with toluene having a water content of 135-140 ppm (400 µL TCMS per 100 mL toluene) in a reaction vessel having an in and outlet. The water content was evaluated using a Karl Fischer coulometer (Mettler Toledo C20 Compact KF coulometer). Similar to above, the Fenton-activated tube was connected to the reaction vessel and pump. Here, Fluran F-5500-A tubes were used to connect the individual parts. After stirring the reaction mixture for 60 s, the reaction vessel was closed, the mixture was pumped inside of the activated tube and the pump was stopped for 30 min. Subsequently, the pump was started again for 5 min with a flow rate of 0.1 mL/min and stopped again for 30 min. Thereafter, the pumping process was continued for 20 h using a flow rate of 0.1 mL/min. Afterwards the TCMS-coated tubes were rinsed with n-hexane and dried under a nitrogen stream.

### Plasma activation of the nanofilament-coated tubes:

To activate the TCMS-coated tubes, they were exposed to an oxygen plasma (Diener Electronic Femto, 120 W, 2 min, 7 cm³/min oxygen flow rate).

### Fluorination of the activated nanofilament-coated tubes:

1*H*,1*H*,2*H*,2*H*-perfluorodecyltrichlorosilane was mixed with n-hexane (50 µL PFDTS per 100 mL n-hexane). The activated tubes were immersed in the solution and the reaction chamber was sealed. Alternatively, the solution was injected or pumped through the tube. After 20 min the fluorinated tubes were rinsed with n-hexane and dried under a nitrogen stream.

### EXAMPLE 2

### Wetting properties of coated tubes

The wetting properties of bare polyurethane/barium sulfate (PU/BaSO₄) tubes and fluorinated silicone nanofilaments on PU/BaSO₄ tube were investigated using different liquids, relevant for biomedical applications (Fig. 5). Due to the small inner diameter (< 1mm) and the high curvature of the tubes, advancing and receding contact angles cannot be determined in a classical way, i.e. using the goniometer technique. However, super-liquid repellency is typically accompanied by few pinning sites and low adhesion. The wettability was quantified indirectly, by monitoring the adhesion of drops to the coating. Drops of 2 or 3 µL volume were placed inside of tubes, ensuring that the drop is still in contact with the needle. Next, the syringe was moved up and down. On bare PU/BaSO₄ tubes the high adhesion between the phosphate buffered saline solution (γ = 72 mN/m) and the PU/BaSO₄ caused that the drop detached and got stuck at the surface (Fig. 5a). Contrary, on the tubes coated with the fluorinated nanofilaments, drops of phosphate buffered saline (PBS), urine (γ = 60-66 mN/m) and blood plasma (γ = 56 mN/m) hardly showed any adhesion (Fig. 5b-d). The drops could be easily removed by retracting the syringe. Drops of diiodomethane (CH₂I₂, γ = 51 mN/m) detached from the syringe upon retraction and rolled out of the tube (Fig 5e). This peculiar behavior is due to the high density of diiodomethane (3.3 g mL⁻¹), causing that the gravitational force exceeded adhesion of the drop to the needle. This demonstrates the super liquid-repellency also to non-polar liquids. As a reference, the authors measured receding contact angles and roll-off angles on glass slides coated with polyurethane and nanofilaments. Phosphate-buffered saline (PBS) on flat polyurethane showed a receding contact angle of 42°±4° and did not roll off. However, PBS on a nanofilament-coated glass slide showed a receding contact angle (RCA) of 158°±4° and a roll-off angle of 1°±1° for 6 µL drops; diiodomethane a RCA of ≈0° and thus no roll-off. After plasma-activation of the nanofilaments, the RCA of PBS and diiodomethane was ≈0°, due to super spreading. On a fluorinated nanofilaments coated glass slide, PBS and diiodomethane showed a RCA of 160°±4° and 149±4°, respectively and the roll-off angles of 1°±1° and 1°±1°, respectively. The extremely low adhesion of the drops to coated tubes is in agreement with the high receding contact angles and low roll-off angles measured on nanofilament-coated glass slides.

### General methods and materials

### Contact angle measurements and drop observation:

Receding contact angles (θ_{rec}) and roll-off angles were measured for different liquids in order to characterize the PU and nanofilament-coated glass slides. The receding contact angle denotes the lowest contact angle during receding of a drop. On a rough surface the receding contact angle is defined as the apparent, macroscopic contact angle of the liquid observed during receding on a length scale much larger than the scale of the microstructures. Receding contact angles were measured using a DataPhysics OCA35 contact angle goniometer. Initially, 6 µL drops were deposited on the coated glass slides. Afterwards, 20 µL of the liquid was added to and removed from the drop. The measurement was consecutively repeated three times at the same spot and at three different spots per membrane. The error of the advancing and receding contact angle measurements was estimated to be ±4 degrees. Roll-off angles were measured using the same DataPhysics OCA35 contact angle goniometer. Therefore, 6 µL drops were deposited on the membranes and the measuring plate was tilted until the drops rolled off. The roll-off angle was determined at least at 6 different spots per membrane and mean roll-off angles and deviations were calculated. The drop adhesion on the coated tubes was observed using the same DataPhysics OCA35 contact angle goniometer. Here, a syringe with a fluorinated tip was used. A 2-3 µL drop was generated at the tip and brought into contact with the coated tube, afterwards the syringe was moved up and down to observe the adhesion of the drop to the tube.

### EXAMPLE 3

### Antibiofouling properties of coated tubes and other substrates

To evaluate the potential of the coated tubes regarding their anti-biofouling properties for medical devices and applications, we incubated tubes in highly concentrated *E. coli* bacteria solutions (10⁸ cells /mL) for 168 h at 37°C. The samples included a bare polyurethane tube as reference, as-prepared nanofilament coated PU tube (Me-NF), a superhydrophilic nanofilament PU tube (OH-NF) and a fluorinated nanofilament coated PU tube (F-NF), (Fig. 6). After incubation for 168 h, the PU tubes were homogeneously covered with *E. coli* (Fig 6a). Remarkably, on the nanofilament coated samples, independently of the surface chemistry and wettability, the coverage with *E. coli* was greatly reduced. Hardly any *E. coli* could be found (Fig. 6b-d). An up to 88-fold reduction in the number of bacteria per cm² was found for the superhydrophilic nanofilaments (Fig. 6e). The as-prepared and fluorinated nanofilaments showed slighty higher coverage. This surprising result shows that the presented coating is capable of effectively reducing bacterial adhesion and biofilm formation in the superhydrophobic as well as in the fully wetted Wenzel state (i.e. demonstrated by the superhydrophilic nanofilament sample). This makes tubes coated with silicone nanofilaments a highly promising candidate for medical applications, e.g. as catheter or stent. The reduced bacterial adhesion and proliferation reduces the infection risk of a patient.

To investigate the influence of surface topography and surface wettability (chemistry and presence of an air cushion), three types of structured surfaces were incubated with an *E. coli* solution: (i) flat fluorinated glass serving as a hydrophobic control surface; (ii) superhydrophobic fluorinated micropillar arrays; (iii) and glass substrates coated with silicone-nanofilaments. Surfaces coated with nanofilaments enabled the investigation of the surface chemistry and the importance of an air cushion under otherwise identical conditions. First, superhydrophobic as-prepared (Me-NF) and fluorinated (F-NF) nanofilaments were prepared. The role of the air cushion was investigated by enforcing wetting of the superhydrophobic fluorinated nanofilaments prior to the deposition of the *E. coli* solution (F-NF, no air). The fully wetted Wenzel state can also be obtained by activating nanofilaments by oxygen plasma (OH-NF) and Fenton reaction to yield superhydrophilic nanofilaments.

The cylindrical micropillars were fabricated by photolithography using an epoxy-based photoresist (SU-8). The micropillars were 5 µm in height, 13 µm in diameter and the spacing between pillars was 7 µm. They were arranged on a 170 µm- thick glass slide and successively fluorinated to render them superhydrophobic.

The silicone nanofilament coatings were synthesized using a mixture of toluene (100 ml) with trace amount of water (∼ 180 ppm) and trichloromethylsilane (0.5 mL). The plasma-activated glass slides were covered by a 1-2 µm thick layer of silicone nanofilaments with a diameter of 50 ± 11 nm after a reaction time of 5 h. Without further treatment these as-prepared silicone-nanofilaments (Me-NF) are superhydrophobic. To render them superhydrophilic (OH-NF), they were activated by oxygen plasma (2 min, 0.4 mbar, 120 W). Some of the hydrophilized nanofilament-coated glass slides were fluorinated. Therefore, the coated glass slides were immersed into 100 mL of hexane containing 50 µL of 1H,1H,2H,2H-perfluorodecyltrichlorosilane (PFDTS) for 30 minutes (F-NF).

The wetting properties of the surfaces were quantified using the culture medium (see Methods). Because to the higher accuracy, the authors measured receding contact angles (*θ_{rec}* of a 6 µL drop of the culture medium on the different surfaces by laser scanning confocal microscopy (LSCM), Table 1. On all superhydrophobic surfaces droplets of 6 µL volume rolled off when tilting the surface by less than 10°. Droplets spread on the superhydrophilic surfaces (OH-NF).

To evaluate the antibacterial performance, 1 mL of eGFP-expressing *E. coli* solution was deposited in chambered cover glasses on the different surfaces. After 72 h of static incubation at 37°C, the surfaces were gently rinsed with Phosphate Buffered Saline (PBS) for observation under a LSCM under wet conditions. The tested surfaces were subsequently rinsed, fixed and dried for SEM characterization.

**Fig 7** shows laser scanning confocal microscopy (LSCM) images and SEM micrographs of various surfaces after 72 h incubation with *E.coli* bacteria at 37°C. **(a)** fluorinated flat glass; **(b)** fluorinated micropillar array with 5 µm height and 7 µm of spacing and 13 µm of diameter; **(c)** glass slide covered with as-prepared nanofilaments **(d)** glass slide covered with fluorinated nanofilaments; **(e)** glass slide covered with fluorinated nanofilament coating where the air cushion was removed prior to incubation; **(f)** glass slide covered with plasma-activated nanofilaments. The LSCM image shows the coverage with bacteria (white spots) close to the pillars' top surface. The *E. coli* were exposed to L-Arabinose for expression of the green fluorescent protein gene, which can be excited at 488 nm. Scale bar of LSCM: 50 µm; scale bar of SEM: 10 µm.

After 72 h of stationary incubation, the fluorinated glass has been covered with several three dimensional micro-colonies, revealed in the confocal microscopy and SEM images (Fig. 7a). On the superhydrophobic SU-8 micropillar arrays the space between the pillars, their top faces and the flat bottom surface are covered with individual bacteria and several micro-colonies, (Fig. 7b). The presence of bacteria at the side walls and bottom surface demonstrates that the solution passed the Cassie-to-Wenzel transition. Notably, only sparse and isolated bacterial cells were observed on all surfaces coated with nanofilaments (Fig. 7c-f, Fig. 8a). Particular low adhesion of bacteria is found on the OH-terminated hydrophilic nanofilament surfaces. These surfaces, showed more than 60 times reduced coverage compared to that on fluorinated glasses although the surfaces were fully wetted by the bacterial solution (Fig. 8a, Table 1). In contrast, the initially superhydrophobic micropillar arrays show the highest average coverage of bacteria to the surface. This is in line with previous observations showing that the increased surface area in the wetted Wenzel state favors adhesion of bacteria.

To gain insight into the long-term antibacterial effect of nanofilament-coated surfaces, the duration of static incubation was extended to 168 h (Figure 8b, Table 1). Remarkably, even after more than doubled incubation times the surface coverage on the fluorinated nanofilament-coated surfaces remained below 0.7 % regardless of the existence of air plastron. On OH-terminated nanofilament-coated surfaces the bacterial coverage was even as low as 0.25 %. Not only the average coverage but also the special distribution of the surface area covered with bacteria differs, Figure 8c. After 168 h incubation, the coverage on the flat fluorinated glass surfaces, varied between 1.4% and more than 40%. Thus, many areas were covered with large three-dimensional bacterial biofilms. In contrast, on the hydrophilic nanofilament-coated surfaces - even after wetting by the bacterial solution - the coverage remained low, varying between 0 and 1%, with an arithmetic mean of 0.25% (Fig, 8c). The characteristic spacing between the irregularly arranged nanofilaments falls just below the average length of bacterial cells. The stiff bacteria cells hardly fit into the spacing. Thus, the irregular 3D topography combined with the characteristic length scales and the strong local bending of the nanofilaments cause the small area where bacteria can adhere. This holds for both, the superhydrophobic Cassie state as well as for the fully wetted Wenzel state.

To explore if the nanofilaments might be effective to delay or prevent adhesion for other bacteria strains too, spherical gram positive *Micrococcus luteus,* and rod-shaped gram negative *Pseudomonas fluorescens* (Fig. 9) were investigated. After 72 h, all nanofilament-coated surfaces (as-prepared, fluorinated, hydrophilic) showed a low bacterial coverage, independent of the presence (F-NF, Me-NF) or absence (OH-NF) of an air cushion.

**Fig. 9** shows SEM images after incubating with *Micrococcus luteus* and *Pseudomonas fluorescens* for 72 h. All nanofilament-coated surfaces induced significant reduction of bacterial coverage. After 72-h incubation, only few microcolonies of M. *luteus* were observed on nanofilment coatings. Compared to *E. coli* and M. *luteus, P. fluorescens* showed a slightly increased surface coverage. Still the adhered bacteria remained isolated.

**Table 1. Coverage area of bacterial cells analyzed based on SEM micrographs of E. coli incubation. The static and receding contact angles for different surfaces are based on LSCM image analysis of 6 mL drops of LB medium deposited on the surfaces. The receding angles were measured by monitoring the three-phase contact line during evaporation of the LB medium.**

| Substrates | Coverage after 72h (%) | Coverage - after 168h (%) | *θ_{static}* (°) | *θ_{rec}* (°) |
|---|---|---|---|---|
| F-glass | 3.1 ± 2.2 | 11 ± 9 | 134 ± 3.6 | 90.5 ± 3.5 |
| F-pillar | 6.0 ± 2.1 | n/a | 165 ± 3.4 | 155 ± 10 |
| Me-NF | 0.30 ± 0.27 | 0.69 ± 0.27 | 176 ± 2 | 168 ± 2 |
| F-NF | 0.53 ± 0.34 | 0.56 ± 0.32 | 177 ± 4 | 176 ± 3 |
| F-NF(no air) | 0.64 ± 0.23 | 0.56 ± 0.52 | <10 | <10 |
| OH-NF | 0.07 ± 0.03 | 0.25 ± 0.23 | <10 | <10 |

### General methods and materials

### Silicone Nanofilament covered glass slides:

Glass slides (Menzel-Gläser) were cleaned by acetone and were subsequently activated by oxygen plasma (300 W, 0.4 mbar, 5 min). The plasma-activated glass slides were immersed into a mixture of toluene containing trichloromethylsilane and trace amounts of water (≈180 ppm) which had been stirred manually for approximately 30 sec in advance. After a reaction time of 5 h, both sides of the glass slides were coated with an approximately 2 µm thick layer of silicone nanofilaments. To investigate the role of the surface energy, some nanofilament coatings were fluorinated. Therefore, the nanofilaments were activated in an oxygen plasma (120 W, 0.4 mbar, 2 min) and immersed into 100 mL of hexane containing 50 µL of 1H,1H,2H,2H-perfluorodecyltrichlorosilane for 30 minutes.

### Wenzel wetted fluorinated nanofilaments:

To investigate fluorinated nanofilaments in the Wenzel state, the air cushion needs to be removed. The fluorinated nanofilament coatings were first pre-wetted by absolute ethanol. Due to its low surface tension y = 0.022N/m, ethanol wets the fluorinated nanofilaments. To avoid the residue of ethanol on the pre-wetted surfaces, the surfaces were rinsed three times with the LB medium. Care was taken that the surface remained fully wetted during these and the following steps to ensure that the solution remained in the fully wetted Wenzel state. The surfaces were subsequently incubated with bacteria solution.

### Fluorinated glass slides:

To fluorinate glass slides, 50 µL of PFDTS was mixed with 100 mL of n-hexane. Glass slides were cleaned by acetone and were subsequently activated by oxygen plasma under 300 Watt for 5 min. The plasma-activated glass slides were immersed in the solution for 30 min. Afterwards, the glass slides were rinsed with n-hexane. The cleaned glass slides were dried under a nitrogen stream.

### SU-8 Pillars:

SU-8 micropillar arrays were prepared on thin glass slides by photolithography. The round pillars were designed 5 µm high, with 314.2 µm² top areas. The pillar-pillar distance between centers of two adjacent pillars in a row was 10 µm. The fabrication process consisted of the following steps. First, glass slides (Menzel-Gläser) were cleaned by acetone and were subsequently activated by oxygen plasma under 100% of the power for 5 min. Then, SU-8 photoresist was spin-coated (500 rpm for 5 s followed by 3000 rpm for 30 s, SUSS MicroTec) on the glass slides. The coated glass slides were heated at 65 °C for 3 min, 95 °C for 10 min and then 65 °C for 30 min, respectively. Subsequently, the samples were slowly cooled down within two hours and exposed to UV light (mercury lamp, 350 W) under a photolithography mask for 14 s (masker aligner SUSS MicroTec MJB3 UV400). To cross-link the photoresist, the samples were heated up again at 65 °C for 1 min, 95° C for 3 min and 65 °C for 30 min, and then cooled down slowly. Next, the samples were immersed in the SU-8 developer solution for 6 min, washed with isopropanol and deionized water, and then dried in air. Now, the surface was coated with SU-8 pillars. The dried samples were immersed in 0.1 M NaOH solution overnight to hydrolyze the surfaces of the SU-8 pillars. After rinsing the hydrolyzed surfaces with water and ethanol, the samples were immersed in a solution containing 50 µL of PFDTS dispersed in 100 mL of n-hexane for 30 min. Finally, the fluorinated SU-8 micropillar surfaces were rinsed with n-hexane and dried under a nitrogen stream.

### Bacteria Preparation:

### Establishing of eGFP-expressing E. coli:

Stellar™ Competent bacteria and T7 express competent *E. coli* were stored at -80 °C until usage. The bacterial stock (in stab culture format) contained the 994 bp long plasmid EGFP-pBAD. Plasmids were isolated using the Qiagen Plasmid *Plus* Maxi Kit according to the manufacturer's protocol. For transformation, Stellar™ Competent bacteria or T7 express competent *E. coli* were thawed in an icebath for 30 minutes. All of the following steps were carried out in 1.5 mL microcentrifuge tubes. 5 ng of EGFP-pBAD plasmid DNA was added directly into the bacterial suspension and mixed gently. The vials were again incubated for 30 minutes on ice. Then, cells were heatshocked for exactly 45 seconds at 42 °C. The tubes were placed on ice for another 2 minutes. Afterwards, Super Optimal broth with Catabolite repression, SOC, medium was added to a final volume of 500 µl and the tubes were incubated for 1 h at 37°C and 300 rpm. Finally, 100 µL solution was plated on agar plates containing ampicillin (100 µg/mL) and incubated overnight at 37 °C. The next day, a single bacterial colony was picked and transferred to LB Medium containing 100 µg/mL ampicillin and incubated for 2 h at 37°C and 300 rpm. To induce the P_{BAD} promotor for eGFP expression, L-Arabinose was added to a final concentration of 0.1% in the LB medium. After another incubation of 1 h at 37°C and 300 rpm, cells exhibited a bright GFP signal. Bacterial cells were subsequently analyzed via confocal laser scanning microscopy. The value of OD₆₀₀ for eGFP-expressing *E. coli* was controlled within 0.13 (1.0 x 10⁸ cells /mL) to 0.15 (1.2 x 10⁸ cells/mL).

### Culture preparation of freeze-dried bacteria (Pseudomonas fluorescens) and active culture:

Gram negative *P. fluorescens* Migula 1895 freeze-dried lyophilized cells were re-hydrated in special tryticase soy broth medium for fluorescence (15 g trypticase soy broth, 500 mL distilled water, pH 7.3, autoclaved 15 min at 121 °C) for 30 min and inoculated on agar plates. This allowed active colonies to grow under specified conditions. For surface incubation experiments single colonies were extracted, transferred to liquid medium and incubated overnight at 300 rpm under 30 °C or 28 °C. Gram positive M. *luteus* was obtained as active culture on agar plates. Upon receipt culture was transferred to fresh Medium 1 (2.5 g peptone, 1.5 g meat extract, 500 mL distilled water, pH 7) and incubated at 30 °C for 24 h at 300 rpm.

### E. coli adhesion testing:

The samples were fixed on a sterile chambered glass. Each chamber was covered with a 3-4 mm thick layer of LB medium (1 ml) containing ampicillin (100 µg/mL) and bacteria *E. coli* (0.15 of OD₆₀₀). The samples were incubated at 37°C for 3 or 7 days. The suspension liquids were disposed and the samples were rinsed by fresh LB medium with ampicillin. The rinsed samples were transferred to sterile centrifuge tubes, and 5 mL of fresh LB medium containing ampicillin (100 µg/mL) was added into all the three tubes. After ultrasonication for 2 min (hold still for 5 sec after every 15-sec ultrasonication), 0.1 mL of 5 mL bacteria solution was further diluted to 1 mL by sterile LB medium with ampicillin (100 µg/mL). 0.1 ml of diluted bacteria solution was plated on agar plates containing ampicillin (100 µg/mL) and incubated over 24 h and 48 h. The number of visible colonies was counted after incubation, and CFU/mL of the original solution was calculated by CFU/mL = (no. of colonies × dilution factor) / volume of culture plate.

### Characterization of samples:

### Scanning Electron Microscopy (SEM):

Surfaces exposed to bacterial media were imaged by SEM (LEO 1530 Gemini, Zeiss, 3 kV) in order to measure the covered surface area. To prepare the samples for SEM investigations, after 72 h or 168 h incubation periods, the culture medium was removed and the samples were washed with a phosphate buffer solution (PBS, 1 mL, 3 times). Adhered bacteria were then fixated adding a 2.5% (v/v) glutaraldehyde with PBS-based solution reagent for 30 min at room temperature. The fixative was afterwards removed and remaining material was washed by thorough rinsing with subsequent volumes of buffer solution. The adhered bacteria were dehydrated by successive ethanol soaking (i.e., 25, 50, 75, 90, and 100% (v/v), 15 min each). To increase the imaging contrast, the dried surfaces were sputter-coated with 5 nm of Pt (BaITec MED 020 Modular High Vacuum Coating System, Argon at 2x10⁻² mbar and 45 mA).

### Laser Scanning Confocal Microscopy (LSCM):

Coatings were prepared on cover glasses and mounted on a flow cell. Attachment of bacteria in course of time was imaged with an inverted laser scanning confocal microscope (LSCM Leica TCS SP8 SMD) which allows to record images with a resolutions of approximately 500 nm and 1 µm (lateral and axial, respectively) for a HCX PL APO 40×/1.1 (water immersion) objective). *E. coli* were treated to express the GFP gene which can be excited using the argon line at 488 nm.

### Data Evaluation:

The area covered by bacteria was evaluated using the Analyze Particles plugin of ImageJ. LSCM data are background free, allowing to directly define a threshold for bacteria recognition. The threshold was chosen to yield best consistency of recognized bacteria with visual inspection. To prevent noise from contributing to the detected area, the minimum area for bacteria objects was set to 0.95µm² for confocal images. For SEM images background subtraction was applied before thresholding to correct for an inhomogeneous background. In the case of pillar substrates, regions on top of the pillars and between pillars were evaluated separately by detecting and masking the pillar region with the DetectCircles plugin of ImageJ.

### Evaluation of bacteria coverage area:

LSCM is a powerful tool to study biofilms as it allows for 3D observation of large surface areas and living colonies under wetted conditions (DOI: doi:10.3791/54771). For high resolution imaging of individual bacteria or colonies we used SEM. For the calculation of the percental area covered by bacteria 4-13 images per surface and incubation time were evaluated, thus the mean area coverage and the standard deviation were calculated. Areas consisting of bacteria were semi-automatically detected by manually setting a thresholding and subsequently using the AnalyzeParticles Plugin in ImageJ. For stack images the slice corresponding to the substrate surface was evaluated. Noise was suppressed by setting a minimum bacteria size to 0.95 µm².

### EXAMPLE 4

### Modification of nanofilaments with polydimethylsiloxane (PDMS) brushes

PDMS brushes were grafted on the surface of nanofilaments through a polycondensation reaction of dimethyldimethoxysilane under sulfuric acid catalysis. Activated hydrophilic nanofilaments turned superhydrophobic subsequent to grafting of the PDMS brushes. As an example, a nanofilament-coated glass slide was activated and after modification the glass-slide showed superhydrophobic properties exhibiting a static water contact angle of > 158° and roll-off angles of 2±1° for 5 µl water drops. In addition, the enhanced flexibility of the PDMS brushes is beneficial to reduce bacterial attachment.

### General methods and materials

### PDMS brushes on nanofilaments:

A reactive grafting solution is prepared by mixing 100 ml isopropanol, 0.43 ml sulfuric acid and 9 ml dimethyldimethoxysilane. This mixture is stirred for 30 sec and then stored at room temperature for 30 minutes before usage. A nanofilament-coated glass slide is activated to yield a hydrophilic surface. Immediately after that, it is immersed in the reactive solution for 10 s. The glass slide is slowly withdrawn from the solution. Excess liquid is removed by placing the rim of the glass slide in contact with adsorbing paper. Subsequently, the substrate is placed in a humidity controlled chamber (60-70 % relative humidity) at room temperature for 20 minutes and then rinsed with toluene, isopropanol and water.

## Claims

1. A method for coating a surface of a 3-dimensional substrate having a non-planar surface geometry, in particular a substrate comprising at least one lumen or cavity, with a highly liquid-repellent and/or microorganism-repellent nanofilament coating comprising at least the following steps:
a) contacting the substrate surface or a part thereof, in particular including the inner surface of any lumen or cavity thereof, for a predetermined period of time with an activating agent to generate oxygen-comprising functional groups, such as hydroxy, carboxy, carbonyl and peroxy groups, preferably hydroxy, or to provide an absorbed water film or adsorbed water drops on said surface;
b) contacting the substrate surface obtained after step a) for a predetermined period of time, preferably in the range from 10 min to 20 h, with a siliconizing agent to form a coating of liquid-repellent and/or microorganism-repellent silicone nanofilaments on said substrate surface or a part thereof, wherein the siliconizing agent comprises at least one substituted silane compound capable to react with oxygen-comprising groups or preabsorbed water film or water drops on said substrate surface and also to undergo a polysiloxane reaction with water to form covalently bonded silicone nanofilaments on said substrate surface or part thereof.

2. The method according to claim 1, wherein the activation agent in step a) is selected from
i) oxidizing agents, in particular oxygen plasma, reagents capable to provide hydroxyl radicals in a chemical reaction, including a mixture of H₂SO₄/H₂O/H₂O₂ with proportions in the range from 1:100:1 to 10:1:10, a mixture of NH₃/H₂O/H₂O₂ with proportions in the range from 1:100:1 to 10:1:10, and reagents including hydrogen peroxide and a catalyst capable to provide hydroxyl radicals in a Fenton's reaction,
ii) a mixture of a C₁-C₇ alkanol, in particular ethanol, and water with a ratio between 80:20 and 20:80 by volume, or a humid gas, in particular air, nitrogen or oxygen having a relative humidity of more than 60%.

3. The method according to claim 1 or 2, wherein the siliconizing agent comprises at least one substituted silane having the general formula R¹SiX₃, wherein R¹ is a C₁-C₂₀ alkyl group or vinyl and X is a hydrolysable group such as a halogen atom or C₁-C₆ alkoxy group, in particular trichloromethylsilane (TCMS), trimethoxymethylsilane, triethoxymethylsilane, trichloroethylsilane, trichlorovinylsilane, or octyltrichlorosilane.

4. The method according to claim 1 or 2, wherein the siliconizing agent comprises at least one fluorinated or perfluorinated silane having the general formula R²SiX₃, wherein R² is a fluorinated or perfluorinated C₄-C₂₀ alkyl group, alternatively a perfluorinated polyether (PFPE) group with 20 to 80 repeating units, and X a hydrolysable group such as a halogen atom or C₁-C₆ alkoxy group, as well as a tetraalkoxysilane (C₁-C₆) or a substituted silane as defined in claim 3.

5. The method according to any one of claims 1-3 further comprising at least one additional modification step c) to provide oxygen-comprising functional groups, fluorinated alkyl groups, grafted or adsorbed polymers or polymer brushes, charged or chargeable moieties, in particular polyelectrolytes, on the surface of said nanofilaments and/or to infiltrate the nanofilament coating with a viscous liquid, in particular a liquid having a dynamic viscosity > 0.004 Pas.

6. The method according to claim 5, wherein step c) comprises at least one of the following steps:
i) contacting the nanofilaments obtained after step b) with an oxidizing agent, in particular oxygen plasma or reagents capable to provide hydroxyl radicals in a Fenton's reaction ;
ii) optionally contacting the nanofilaments obtained after step i) with a fluorinated or perfluorinated silane having the general formula R²SiX₃, wherein R² is a fluorinated or perfluorinated C₆-C₂₀ alkyl group, or a perfluorinated polyether (PFPE) group with 20 to 80 repeating units, and X is a hydrolysable group such as a halogen atom or C₁-C₆ alkoxy group;
iii) applying a layer of grafted or adsorbed polymers or polymer brushes, in particular flexible polyethylene glycol and polydimethylsiloxane brushes, charged or chargeable polyelectrolytes, in particular polyacrylamides, polyacrylates, quaternary ammonium containing polymers and polyzwitterionic species and dextranes, onto the surface of nanofilaments obtained after step b) or ci).

7. The method according to any one of claims 1-6, wherein step b) is effected by flushing a liquid comprising the siliconizing agent through the at least one lumen or cavity of the 3-dimensional substrate.

8. A 3-dimensional substrate having a non-planar surface geometry, in particular a substrate comprising at least one lumen or cavity having a high aspect ratio, with a highly liquid-repellent and/or microorganism-repellent coating comprising silicone nanofilaments, in particular on the inner surface of said lumen or cavity or at least a part thereof.

9. The substrate according to claim 8, wherein the surface of the silicone nanofilaments displays oxygen-comprising functional groups, in particular hydroxyl groups, grafted or adsorbed polymers or polymer brushes, in particular flexible polyethylene glycol and polydimethylsiloxane brushes, charged or chargeable polyelectrolytes, in particular polyacrylamides, polyacrylates, quaternary ammonium containing polymers and polyzwitterionic species, e.g. poly(carboxybetaine methacrylate), poly(sulfobetaine methacrylate), and dextranes, fluorinated alkyl groups, or wherein a layer of a material comprising oxygen-comprising functional groups, fluorinated alkyl groups, grafted or adsorbed polymers or polymer brushes, or charged or chargeable moieties is provided on the surface of said silicone nanofilaments, and/or wherein the nanofilament coating is infiltrated by layer of a viscous liquid having a dynamic viscosity > 0.004 Pas, and/or wherein the polysiloxane scaffold of said silicone nanofilaments comprises at least one fluorinated or perfluorinated silane monomer unit.

10. A substrate having a microorganism-repellent coating comprising silicone nanofilaments, wherein the surface of the silicone nanofilaments displays oxygen-comprising functional groups, in particular hydroxyl groups, grafted or adsorbed polymers or polymer brushes, in particular flexible polyethylene glycol and polydimethylsiloxane brushes, charged or chargeable polyelectrolytes, in particular polyacrylamides, polyacrylates, quaternary ammonium containing polymers and polyzwitterionic species, e.g. poly(carboxybetaine methacrylate), poly(sulfobetaine methacrylate), and dextranes, fluorinated alkyl groups, charged or chargeable moieties, or wherein a layer of a material comprising oxygen-comprising functional groups, fluorinated alkyl groups, grafted or adsorbed polymers or polymer brushes, or charged or chargeable moieties is provided on the surface of said silicone nanofilaments, and/or wherein the nanofilament coating is infiltrated by layer of a viscous liquid having a dynamic viscosity > 0.004 Pas.

11. The substrate according to claim 9 or 10, wherein the silicone nanofilaments are coated with a layer of grafted or adsorbed polymers or polymer brushes, in particular flexible polyethylene glycol and polydimethylsiloxane brushes, charged or chargeable polyelectrolytes, in particular polyacrylamides, polyacrylates, quaternary ammonium containing polymers and polyzwitterionic species, e.g. poly(carboxybetaine methacrylate), poly(sulfobetaine methacrylate), and dextranes.

12. The substrate according to any one of claims 8-11, wherein the silicone nanofilament coating remains highly microorganism-repellent even in the wetted Wenzel state or partially wetted Cassie/Wenzel state.

13. The method or substrate according to any one of claims 1-12, wherein the substrate is or comprises a tubular element or tubing, in particular a tubular element or tubing having a high aspect ratio, i.e. a ratio length : inner diameter in the range from 100000 : 1 to 2: 1, preferably from 50000:1 to 5:1, more preferably from 10000:1 to 10:1, most preferably in the range from 2000:1 to 20:1., and the coating is on the inner surface of said tubing, and wherein the tubing preferably has a length of more than 1 cm and an inner diameter of less than 5 mm, preferably a length of more than 10 cm and an inner diameter of less than 3 mm, more preferably a length of more than 20 cm and/or an inner diameter of less than 2 mm or 1 mm.

14. The method or substrate according to any one of claims 1-13, wherein the nanofilaments have a mean diameter in the range from 5 nm to 200 nm, preferably in the range from 10 nm to 120 nm, more preferably in the range from 20 nm to 80 nm and a length in the range from 200 nm to 20 µm, preferably in the range from 400 nm to 10 µm, more preferably in the range from 600 nm to 5 µm, and/or a mean interfilament distance in the range from 50 nm to 1000 nm, preferably from 100 nm to 500 nm.

15. The method or substrate according to any one of claims 1-14, wherein the substrate comprises or consists of a material selected from the group of organic polymers, in particular high density polyethylene (HDPE), low density polyethlene (LDPE), polypropylene (PP), polyurethane (PU), polyvinylchloride (PVC), polysiloxanes, polydimethylsiloxane (PDMS, silicone, polyamide, polyvinylidene fluoride, ethylene-vinyl acetate (EVA), polystyrene (PS), polytetrafluoroethylene (PTFE), poly(2-hydroxyethyl methacrylate) (pHEMA), or polyisoprene or others, inorganic/organic hybrid materials, in particular PU/BaSO₄, polymer/titania, polymer/silica combinations, and inorganic ceramics, in particular Al₂O₃, ZrO₂ metals, in particular copper, iron, steel and brass.

16. The method or substrate according to any one of claims 1-15, wherein the nanofilament-coated substrate is free from and does not release any additional biocide or anti-fouling agent.

17. The substrate according to any one of claims 8-16, which is a medical device or a component thereof, in particular a stent or shunt, an infusion or catheter tubing, part of a microfluidic device, gas exchange device, water transportation or purification device.

18. Use of the substrate according to any one of claims 8-17 in medical applications, in particular as a stent or shunt, infusion or catheter tubings, fluidic or microfluidic applications, gas exchange applications, water transportation or purification applications.

19. Use of a silicone nanofilament coating, in particular a hydrophilic or superhydrophilic coating, wherein the nanofilaments have a mean diameter in the range from 5 nm to 300 nm, preferably in the range from 20 nm to 150 nm, more preferably in the range from 30 nm to 80 nm and a length in the range from 200 nm to 20 µm, preferably in the range from 400 nm to 10 µm, more preferably in the range from 600 nm to 5 µm, and/or a mean interfilament distance in the range from 20 nm to 1000 nm, preferably from 100 nm to 500 nm, as a microorganism-repellent or antifouling coating.

20. The use according to claim 19, wherein the surface of the nanofilaments displays oxygen-comprising functional groups, in particular hydroxyl groups, grafted or adsorbed polymers or polymer brushes, in particular flexible polyethylene glycol and polydimethylsiloxane brushes, charged or chargeable moieties, in particular polyelectrolytes, such as polyacrylamides, polyacrylates, quaternary ammonium containing polymers and polyzwitterionic species e.g. poly(carboxybetaine methacrylate), poly(sulfobetaine methacrylate) and dextranes, or wherein a layer of a material comprising oxygen-comprising functional groups, grafted or adsorbed polymers or polymer brushes, in particular flexible polyethylene glycol (and polydimethylsiloxane brushes, charged or chargeable moieties, in particular polyelectrolytes, such as polyacrylamides, polyacrylates, quaternary ammonium containing polymers and polyzwitterionic species, e.g. poly(carboxybetaine methacrylate), poly(sulfobetaine methacrylate), and dextranes, is provided on the surface of said silicone nanofilaments, and/or wherein the nanofilament coating is infiltrated by a layer of a viscous liquid having a dynamic viscosity > 0.004 Pas.
